Europäisches Patentamt

European Patent Office

Office européen des brevets

(11) Veröffentlichungsnummer: **0 125 482**
**B1**

(12) # EUROPÄISCHE PATENTSCHRIFT

(45) Veröffentlichungstag der Patentschrift:
25.02.87

(51) Int. Cl.⁴: **C 08 L 67/02 //**
**(C08L67/02, 33:00)**

(21) Anmeldenummer: **84103912.6**

(22) Anmeldetag: **07.04.84**

(54) **Polyesterrohstoff, daraus hergestellte Formkörper, vorzugsweise eine Folie, sowie Verwendung der Formkörper.**

(30) Priorität: **16.04.83 DE 3313923**

(43) Veröffentlichungstag der Anmeldung:
**21.11.84 Patentblatt 84/47**

(45) Bekanntmachung des Hinweises auf die Patenterteilung:
**25.02.87 Patentblatt 87/9**

(84) Benannte Vertragsstaaten:
**BE DE FR GB IT LU NL**

(56) Entgegenhaltungen:
**DE-A-3 019 073**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Seifried, Walter, Dr., Am Güldenplan 9, D-6200 Wiesbaden (DE)**
Erfinder: **Engel, Dieter, Dr., Rüsselsheimer Strasse 33, D-6092 Kelsterbach (DE)**
Erfinder: **Denneler, Werner, Dr., Stumpenhof 70, D-7310 Plochingen (DE)**

## Beschreibung

Die vorliegende Erfindung betrifft einen Polyesterrohstoff, der feinteilige, im wesentlichen homodispers verteilte, vernetzte Polymerteilchen enthält, die durch ein Emulsionspolymerisationsverfahren hergestellt wurden und die eine enge Korngrößenverteilung aufweisen. Die Polymerteilchen werden in den Polyester bei dessen Synthese eingebaut.

Die Erfindung betrifft auch Formkörper aus dem genannten Polyesterrohstoff, vorzugsweise eine Restreckte, insbesondere biaxial gestreckte Folie, wobei diese Folie auch Teil einer mehrschichtigen Folie sein kann.

Die Erfindung betrifft weiterhin Fasern oder Fäden auf der Grundlage des Rohstoffes oder unter Zusatz des Rohstoffes zu anderen Polymeren.

Die Erfindung bezieht sich außerdem auf die Verwendung der Folie, insbesondere als Trägermaterial für magnetische Aufzeichnungsträger oder als Kondensatorfolie, sowie die Verwendung der Fasern oder Fäden, vorzugsweise zur Herstellung von Reifencord.

Polyester, insbesondere Polyethylenterephthalat oder Polyestercopolymere, finden wegen ihrer überragenden Eigenschaften, insbesondere in Form orientierter, vorzugsweise biaxial orientierter Folien, in vielen technischen Einsatzgebieten Verwendung, so z.B. als Dielektrikum in Kondensatoren, als Trägermaterial für Video-, Audio- und Computerbänder, als Prägefolien und anderes mehr.

Für die verschiedenen Anwendungsgebiete müssen die Polyesterfolien eine Anzahl von speziellen Eigenschaften aufweisen, die gezielt im Herstellungsprozeß eingestellt werden oder schon im Rohstoff vorgebildet sein müssen. Vor allem einer gezielten Einstellung der Oberflächeneigenschaften, insbesondere der Oberflächenrauhigkeitsstruktur und des damit zusammenhängenden Gleit - und Abriebverhaltens, ist heute bei den hohen Verarbeitungsgeschwindigkeiten und bei den Dauerbelastungen bei der Verwendung Rechnung zu tragen.

Sollen die Folien z.B. als Träger für magnetische Aufzeichnungsmaterialien in der Audio-, Video- und Computertechnik eingesetzt werden, werden neben einem gleichmäßigen und guten Gleitverhalten und hoher Abriebfestigkeit besonders hohe Anforderungen an die Gleichmäßigkeit der Oberflächenstruktur gestellt. Insbesondere dürfen an der Oberfläche keine größeren Partikel vorhanden sein, die z.B. bei der Beschichtung mit einer magnetisierbaren Schicht zur Ausbildung unerwünschter Erhebungen führen, welche dann bei der Verwendung der Folie z.B. als Informationsträger zu einem Informationsverlust führen und ihre Verwendbarkeit einschränken bzw. beeinträchtigen. Ebenfalls ergeben sich durch die unerwünschten Erhebungen von groben Teilchen bei der Metallisierung für Kondensatorfolien Schwierigkeiten. Hierbei werden gute Oberflächeneigenschaften verlangt, die durch Ungleichmäßigkeiten des Pigmentes stark vermindert werden.

Hohe Anforderungen bezüglich der Gleichmäßigkeit der Oberfläche werden auch beim Einsatz von Polyesterfolien als Prägefolien gestellt. In weiteren technischen Anwendungen spielt eine gute Transparenz der Folien eine dominierende Rolle.

Es gehört zum Stand der Technik, die Nachteile durch Zugabe von Pigmenten mit sehr breiter Korngrößenverteilung zu Polymeren zu überwinden oder zumindestens abzumildern, z.B. durch Klassieren der anorganischen Teilchen oder durch Beeinflussung der Katalysatorfüllung, durch die Wahl der Katalysatoren und die Wahl der Art und Menge der zugesetzten Phosphorstabilisatoren bei der Polyesterherstellung.

Eine ausführliche Zusammenfassung des Standes der Technik und der Ziele zur Überwindung der Nachteile bei der Strukturierung von Folienoberflächen durch eine Katalysatorfällung oder durch die Zugabe von anorganischen Pigmenten ist der DE-OS 30 19 073 zu entnehmen.

In dieser Offenlegungsschrift wurde vorgeschlagen, insbesondere zur Verbesserung der Affinität zwischen den zugesetzten Teilchen und der Polymermatrix in die Polyesterfolien vernetzte Teilchen zu inkorporieren, welche durch Pulverisieren eines vernetzten Polymeren mit einer spezifischen Oberfläche von mindestens 1 m²/g und einem Porenvolumen von mindestens 0,1 ml/g gebildet werden. Die beschriebenen, mit diesen Teilchen zu erzielenden Verbesserungen aufgrund einer besseren Affinität zum Polyester - entweder durch Ausfüllung der vorgebildeten Hohlräume mit Matrixpolymer oder durch echte kovalente Verknüpfung der Teilchen mit der Polymermatrix - erfordern einen hohen technischen Aufwand bei der Herstellung der Teilchen. Wie offenbart, muß zur Herstellung der als Additive für folienbildende Polyester beschriebenen Polymerpartikel in einer Emulsionspolymerisation unter Zusatz von linearen Polymeren und Lösungsmitteln ein poröses vernetztes Copolymeres polymerisiert werden.

Es müssen weiterhin zur Erzielung einer guten Mahlbarkeit und zur Vermeidung von störenden Schäumen das zugesetzte organische Lösungsmittel und die geradkettige Polymerverbindung extrahiert werden.

Es ist weiterhin erforderlich, daß das Polymere auf einer Strahlenmühle auf eine Korngröße von ca. 10 µm vorgemahlen wird.

Zusätzlich ist erforderlich, daß die gewünschte Korngrößenverteilung durch einen oder mehrere Mahlvorgänge in einer Perlmühle eingestellt wird.

Ein entscheidender Nachteil dieses Verfahrens nach dem Stand der Technik - außer dem hohen technischen Aufwand bleibt, daß bei der Art der Einstellung der Korngröße der Partikel eine gewisse Korngrößenverteilung mit den Problemen von Überkorn, d.h. Teilchen mit einer über den Durchschnitt herausragenden Größe, unvermeidlich gegeben ist.

Es stellte sich somit die Aufgabe, einen Polyesterrohstoff zu schaffen, der feinverteilte, im wesentlichen homodispers verteilte, vernetzte Polymerteilchen enthält, die im Polyestermaterial eine enge Korngrößenverteilung aufweisen und die eine gute Affinität zum Rohstoff besitzen, die beim Einbau in den Rohstoff eine gute Verteilung ergeben und die bei der Herstellung von Formkörpern, insbesondere Folien, vorzugsweise in gestreckter Form, eine strukturierte Oberfläche aufweisen, die keine unerwünschten Überstrukturen (im Plus- und/oder Minusbereich), Agglomerate oder grobe Oberflächenerhebungen zeigt.

Die der Erfindung zugrundeliegende Aufgabe wird gelöst durch einen Polyesterrohstoff, wie er in den Ansprüchen 1 und 2 beschrieben ist, und durch aus diesem Material hergestellte Formkörper, die in den Ansprüchen 3 bis 9 näher charakterisiert sind.

Es wurde nun überraschenderweise gefunden, daß zum Einbau in Polyesterrohstoffe geeignete, vernetzte Polymerteilchen durch Emulsionspolymerisation in geeigneter Größenverteilung hergestellt werden können. Es hat sich weiterhin gezeigt, daß die erfindungsgemäß verwendeten Teilchen bei der Emulsionspolymerisation in nahezu monodisperser Verteilung praktisch überkornfrei erhalten werden und die bei der Herstellung anfallenden Emulsionen ohne einen aufwendigen Mahl- oder Klassierprozeß direkt bei der Polyestersynthese zugesetzt werden können und dabei eine vorzügliche Verteilung im Polymeren ergeben.

Des weiteren hat sich gezeigt, daß die unter Verwendung der erfindungsgemäßen Teilchen hergestellten Formkörper, z.B. Folien, bevorzugt in gestreckter, insbesondere in biaxial gestreckter, Form, eine sehr gleichmäßig strukturierte Oberfläche mit einheitlichen Erhebungen ergeben, die frei sind von störenden größeren als durch die einheitliche Korngröße der zugesetzten Teilchen bestimmbaren Erhebungen.

Weiterhin wurde gefunden, daß durch die durch den Herstellungsprozeß bestimmte kugelförmige Gestalt der vernetzten Teilchen bei der Verwendung in vorzugsweise verstreckten Folien die aus der Oberfläche herausragenden Erhebungen ebenfalls weitgehend eine sphärische Gestalt aufweisen, wodurch eine ganz definierte Oberflächenrauhigkeit erhalten wird und wodurch ein hervorragendes Abriebverhalten gegeben ist.

Mit den vernetzten, kovalent eingebauten Polymerteilchen ist es möglich, über die Wahl der Konzentration im Polyester und über die Wahl der Korngröße der zugesetzten Teilchen eine Oberfläche von Formkörpern, vorzugsweise orientierten Folien, in der Weise zu strukturieren, daß das Verhältnis zwischen der durch die Erhebungen - z.B. bei der Kontaktierung von Folien mit Walzen - gegebenen Kontaktfläche zu der durch den Freiraum zwischen den Erhebungen gegebenen Fläche in allen Verhältnissen gut eingestellt werden kann und auch die Höhe zwischen der Kontaktflächenebene und der Freiraumebene in engen Grenzen eingestellt werden kann.

Es kann z.B. eine sehr hohe Spitzendichte mit einer äußerst engen Spitzenhöhenverteilung erzielt werden. Es kann ebenso eine gewünschte Teilchengrößenverteilung durch Abmischen unterschiedlicher Teilchengrößen hergestellt werden, wobei jedoch die unten angegebenen Bedingungen eingehalten werden müssen.

Der Rohstoff enthält erfindungsgemäß 0,005 bis 5,0 Gew.-% an Polymerteilchen, deren Korngrößenverteilung im Bereich von 0,02 bis 2,0 µm liegt, wobei der Quotient aus dem Gewichtsmittel des Teilchendurchmessers ($D_w$) und dem Zahlenmittel des Teilchendurchmessers ($D_n$) bevorzugt < 1,1, besonders bevorzugt < 1,05 ist. Zur Bestimmung von $D_w$ und $D_n$ siehe U.E. Woods, J.S. Dodge, I.M. Krieger, P. Pierce, Journal of Paint Technology Vol. 40, No. 527, S. 545 (1968).

Unter Polyesterrohstoffen sind solche Polymere zu verstehen, die vorzugsweise im wesentlichen aus Ethylenterephthalateinheiten und/oder vorzugsweise bis zu 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahren mit den üblichen Katalysatoren, wie z.B. Zn-, Ca-, Li- und Mn-Salzen, oder nach dem Direktveresterungsverfahren erfolgen.

Die Polyesterfolien können nach an sich bekannten Verfahren, die nicht näher beschrieben werden müssen, aus obenbeschriebenen Rohstoffen oder in Kombination obiger Polyesterrohstoffe mit weiteren Rohstoffen oder Zusätzen sowohl als Monofolien als auch als mehrschichtige, gegebenenfalls coextrudierte Folien mit gleichwertig oder unterschiedlich ausgebildeten Oberflächen hergestellt werden, wobei eine Oberfläche pigmentiert ist und die andere Oberfläche kein Pigment enthält.

Insbesondere bei einem mehrstufigen Streckprozeß mit hohen Verstreckgraden in einer bevorzugten oder in beiden Flächenrichtungen, z.B. bei der Herstellung von Folien mit sehr hohen mechanischen Eigenschaften, kommen die Vorzüge der erfindungsgemäß kovalent eingebauten Partikel besonders zum Tragen. Hierbei sind auch Streckprozesse mit der Folge längs-quer-längs, simultan (längs-quer) und eine Mehrfachstreckung in einer oder beiden Richtungen vorgesehen.

Es ist für die Erfindung vorzugsweise vorteilhaft, die in einer Emulsionspolymerisationsreaktion hergestellten, nahezu monodispersen, vernetzten Polymerteilchen mit den oben angegebenen Daten, die eingebaute reaktive Gruppen tragen, möglichst frühzeitig in die Polyestersynthese einzubringen, z.B. vorteilhaft zu Beginn der Umesterungsreaktion oder im Falle der Direktveresterung zu Beginn der Veresterungsreaktion.

Es ist ein besonderer Vorzug der Erfindung, daß die vernetzten Polymerpartikel in der bei der Emulsionspolymerisation anfallenden Dispersion direkt der Polymersynthese zugeführt werden können, ohne aufwendige Zerkleinerungs-, Sichtungs-, Filtrations- und Reinigungsprozesse durchführen zu müssen. Dazu wird in die wäßrige Dispersion aus der Polymerisation z.B. Ethylenglykol gegeben oder zu Beginn oder während des Polymerherstellverfahrens zugesetzt.

Die Herstellung der vernetzten Partikel kann in einem Emulsionspolymerisationsverfahren in der Weise erfolgen, daß man vernetzten oder unvernetzten Latex vorlegt bzw. in situ erzeugt und in einer oder mehreren Stufen die Primärpartikel durch Aufquellen und Polymerisieren von weiterem Monomer bzw. einer Monomermischung auf die gewünschte Teilchengröße vergrößert.

Bei der Emulsionspolymerisation kann mit oder ohne Emulgatorzusatz gearbeitet werden. Als Emulgatoren können die üblichen Emulgatoren zur Emulgierung und zur Stabilisierung des Latex eingesetzt werden. Beispiele dazu sind anionische Emulgatoren, wie Alkylsulfate, Alkylarylsulfate, Alkylarylsulfonate, Alkali- und/oder Ammoniumsalze von Alkyl-, Alkylarylpolyglykolethersulfonaten, sowie nichtionische Emulgatoren, wie oxethylierte Fettalkohole und Alkyl- und Alkylarylphenole.

Vorzugsweise wird die Emulgatormenge so gering wie möglich gehalten. Besonders bevorzugt sind emulgatorfreie und schutzkolloidfreie Herstellverfahren.

Beispiele für gegebenenfalls einsetzbare Comonomere in die Polymerteilchen sind ungesättigte nichtionische Monomere, wie die Ester der Acryl- und Methacrylsäure, beispielsweise Methylmethacrylat, Butylacrylat, 2-Ethylhexylacrylat, Ethylacrylat, vorzugsweise Methylmethacrylat und Butylacrylat, die Diester von ungesättigten Dicarbonsäuren, wie Maleinsäuredialkylester, ungesättigte Vinylverbindungen, wie Styrol und Vinyltoluol, ungesättigte Nitrile, wie Acrylnitril und Methacrylnitril, funktionelle Monomere, wie ungesättigte Carbonsäuren, beispielsweise Methacrylsäure, Acrylsäure, Maleinsäure, Crotonsäure, Itaconsaure, hydroxylgruppenhaltige Monomere, wie Hydroxyethylmethacrylat, Hydroxyethylacrylat, Hydroxypropylmethacrylat, Hydroxypropylacrylat, N-Methylolmethacrylamid, epoxidgruppenhaltige Monomere, wie beispielsweise Glycidylmethacrylat und Allylglycidylether, ungesättigte Sulfonsäuren, wie Ethansulfonat oder Acrylamidopropansulfonsäure.

Beispiele für vernetzende Komponenten für die zu inkorporierenden Teilchen sind polyethylenisch ungesättigte Verbindungen, wie Diallylphthalat, Divinylbenzol, Butandioldimethacrylat, Ethandioldimethacrylat, Hexandioldimethacrylat, Ethandioldiacrylat, Butandioldiacrylat, Hexandioldiacrylat, Pentaerythritoltriacrylat, Trimethylolpropantriacrlyat, Tetraethylenglykoldiacrylat, Tripropylenglykoldiacrylat, Trimethylolpropantrimethacrylat.

Besonders geeignete Beispiele für die Komponenten, die funktionelle Gruppen tragen und zu diesem Zweck in die Teilchen einpolymerisiert werden, daß sie bevorzugt in der Polyestersynthese kovalente Bindungen zwischen Polyestermatrix und vernetzten Teilchen ausbilden können, sind Hydroxyethylmethacrylat, Acrylsäure und Methacrylsäure.

Der Vernetzungsgrad der Teilchen kann durch die Zusammensetzung, insbesondere durch die Menge der vernetzenden Komponente in weiten Grenzen variiert werden. So können Teilchen von weicher, gummielastischer Konsistenz bis zu harter, spröder, hochvernetzter Struktur hergestellt werden.

Es ist ein Vorzug der Erfindung, daß die vernetzten Teilchen während der Polymersynthese nicht löslich und nicht schmelzbar sind und auch beim mehrmaligen Aufschmelzen des Polyesters zur Formkörper-, insbesondere zur Folienherstellung, oder bei der Regenerierung von Abfällen ihr ursprüngliches Volumen beibehalten.

Im allgemeinen bleibt die bei der Herstellung weitgehend angefallene Kugelgestalt der Teilchen bei ausreichender Vernetzung erhalten und führt bei den Formkörpern, vorzugsweise Folien, besonders bei ausgeglichener Verstreckung ebenfalls zu sphärischen Oberflächenerhebungen. Mit Hilfe von weniger vernetzten, d.h. duktilen Teilchen kann aber auch eine Oberfläche mit abgeflachten Erhebungen erzielt werden.

Die Vorzüge der erfindungsgemäßen Rohstoffe und daraus hergestellter Formkörper, bevorzugt Folien, liegen darin, daß man auf einfache Weise sehr gleichmäßige Oberflächenstrukturen ohne störende größere Erhebungen erzielen kann, die die Weiterverarbeitung und/oder -verwendung erschweren könnten.

Insbesondere wird durch den kovalenten Einbau der strukturierenden Teilchen eine gute Abriebfestigkeit von Formkörpern erzielt. Aufgrund der außerordentlich guten nahezu homodispersen Verteilung der vernetzten Teilchen im Polyester lassen sich sehr regelmäßig strukturierte Oberflächen beim Zusatz von hohen Konzentrationen erzielen. Durch die dichte Packung und die gleichmäßige Höhe der Erhebungen wird eine wabenmusterartige Struktur erzielt, wobei die zwischen den Erhebungen vorhandenen Vertiefungen beim schnellen Gleiten der Formkörper, vorzugsweise Folien, kleine Luftpolster einschließen und damit ein günstiges Gleitverhalten hervorrufen.

So sind z.B. die erfindungsgemäß hergestellten hochwertigen Folien in vielen technischen Einsatzgebieten anwendbar. Sie sind z.B. besonders zur Erzielung von strömungsfreien Oberflächen durch Bedampfen mit Metall oder durch dünne Beschichtungen für die Anwendung in der Video-, Audio- und Computertechnik oder als Kondensator-, Präge und Trennfolien geeignet.

Anhand der nachfolgenden beispielhaften Abbildungen ist der Vorteil der Erfindung gegenüber dem Stand der Technik deutlich erkennbar.

Die Messungen wurden wie folgt vorgenommen:

Korngrößenverteilung:

1. Mit Coulter Counter der Firma Coulter Electronics, Modell IIA,

2. Für sehr feinteilige Teilchen mit einem Tröpfchenspektrometer.

Aufgenommen wurde jeweils die Massenverteilung = Volumenverteilung unter Zugrundelegung der Kugelgestalt.

$d_{50}$ = Zentralwert der Korngrößenverteilung

$KG_1$ = ermittelte Korngröße für 1% Rückstand bzw. 99% Durchgang

$KG_{10}$ = ermittelte Korngröße für 10% Rückstand

$\dfrac{KG_{10}}{KG_{90}}$ = Enge der Korngrößenverteilungskurve

Oberflächenrauhigkeit der Folien:

1. Durch Gould-Messungen,

2. mittels Perthometer, gemessen wurde der $R_z$-Wert (gemittelte Rauhtiefe als Mittelwert aus den Einzelrauhtiefen von fünf aufeinanderfolgenden Einzelmeßstrecken, siehe DIN 4768),

$R_t$-Wert (maximale Rauhtiefe zwischen höchstem und tiefstem Punkt des Rauhheitsprofils).

Durch eine Interferenzmethode kann auf einfache Weise kontrolliert werden, ob grobe Erhebungen vorliegen.

Oberflächenstruktur der Folien:

Durchlichtaufnahmen

Rasterelektronenmikroskop-Aufnahmen

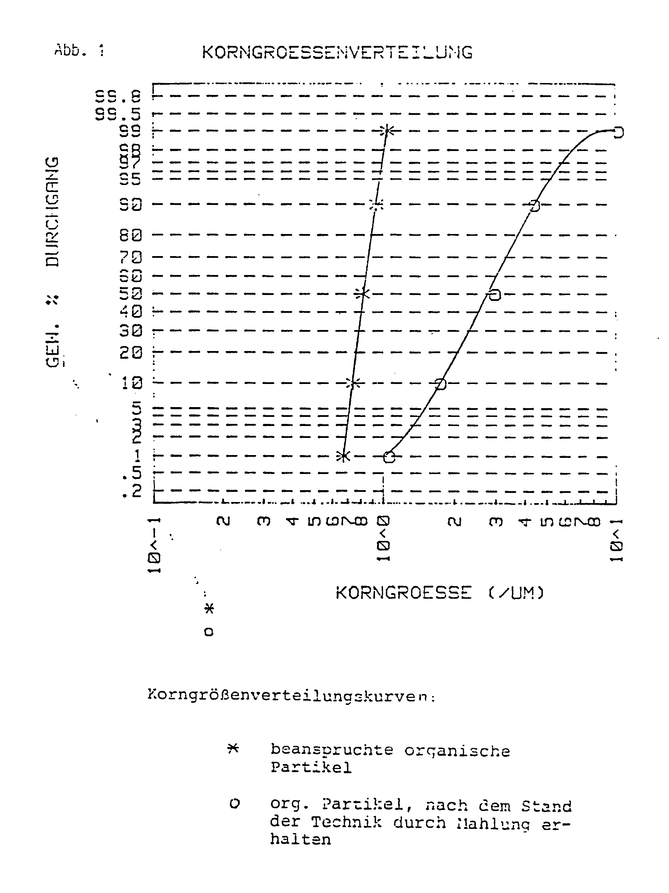

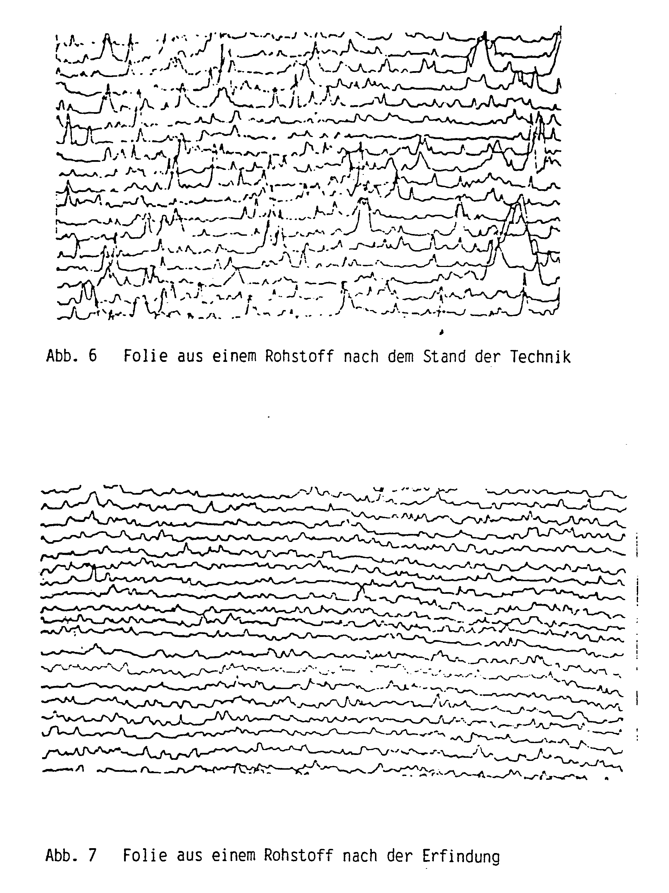

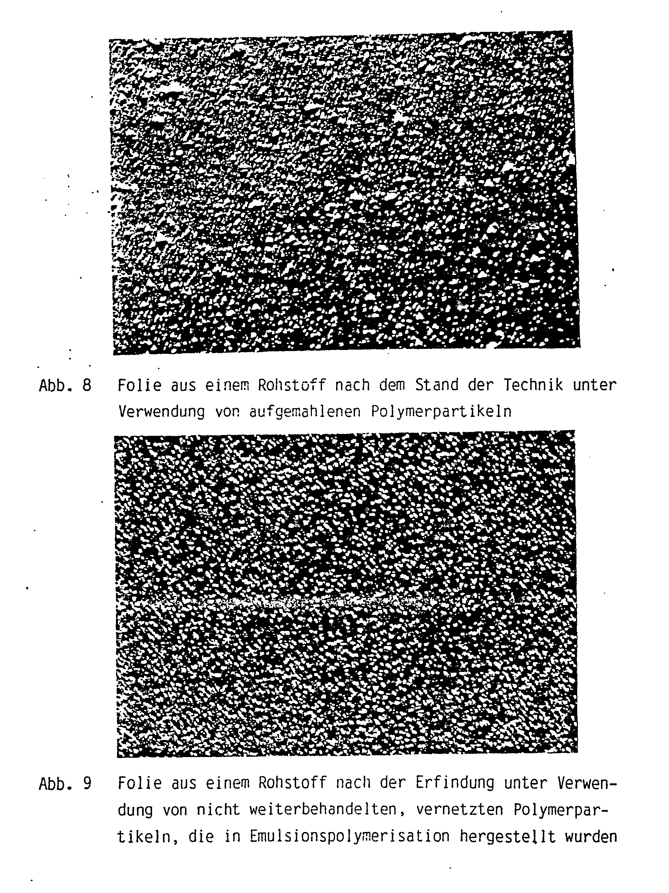

Abbildung 1 zeigt die äußerst enge Korngrößenverteilung von erfindungsgemäß eingesetzten Polymerpartikeln gegenüber den gemahlenen Partikeln nach dem Stand der Technik.

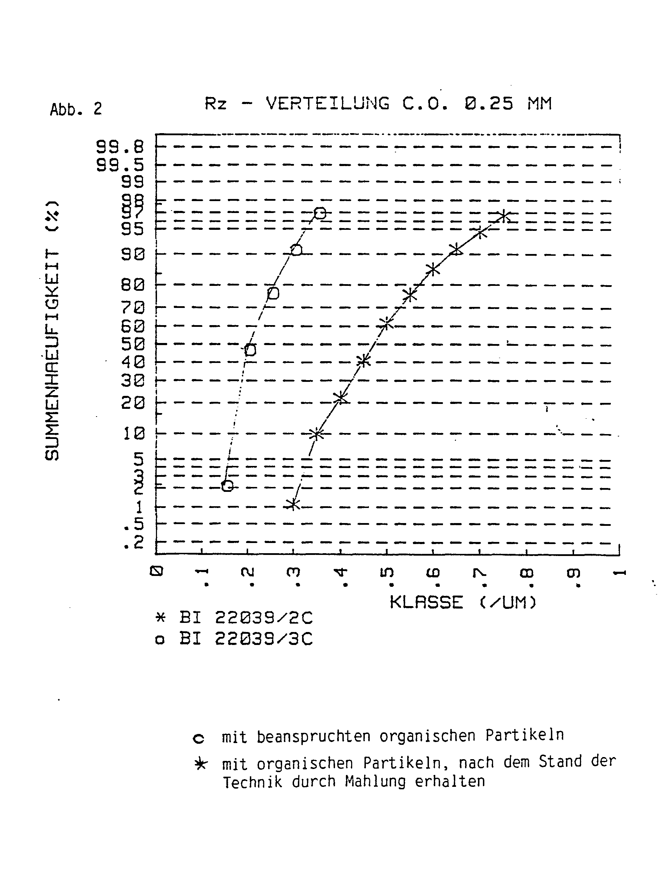

Abbildung 2 ist eine Darstellung der $R_z$-Verteilung einer biaxial gestreckten Polyethylenterephthalatfolie, wobei ebenfalls die Gleichmäßigkeit der Oberflächen gegenüber dem Stand der Technik erkennbar ist.

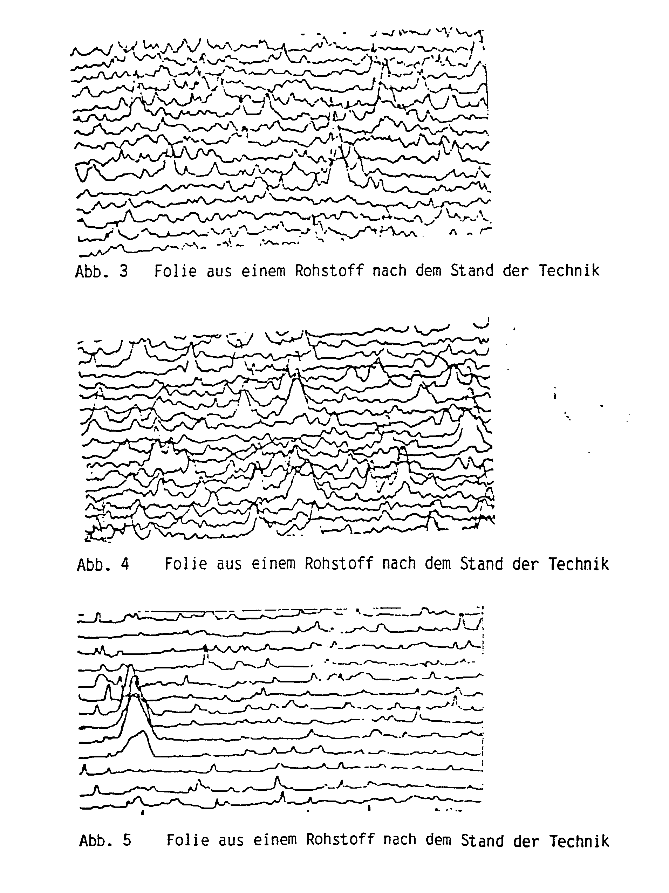

Die Abbildungen 3 bis 6 sind Gould-Schriebe von biaxial gestreckten Polyethylenterephthalatfolien nach dem Stand der Technik (DE-OS 30 19 073). Diese Diagramme sind angefertigt worden mit einem Gerät, welches die Oberfläche der zu untersuchenden Folie mechanisch abtastet und dadurch elektrische Impulse erzeugt, welche an einen Verstärker weitergeleitet und danach auf einen Schreiber übertragen werden. Die Verstärkung wurde so eingestellt, daß 1 cm in Richtung der von links nach rechts fortlaufenden Kurven 100 µm Meßstrecke auf der Folienoberfläche entsprechen; senkrecht dazu, in Richtung der in Abständen nebeneinander angeordneten Kurven, entspricht ebenfalls 1 cm in den Abbildungen 100 µm Meßstrecke auf der Folienoberfläche; senkrecht zur Zeichenebene, also in Richtung der dargestellten Erhebungen entspricht 1 cm in den Abbildungen einer Erhebung auf der vermessenen Folienoberfläche von 0,5 µm. In den Abbildungen sind deutlich die Unregelmäßigkeiten der Oberfläche durch extrem herausragende Spitzen (Überkorn) zu erkennen.

Abbildung 7 zeigt die besondere Gleichmäßigkeit einer aus einem erfindungsgemäßen Rohstoff hergestellten, biaxial gestreckten Polyethylenterephthalatfolie. Die Verstärkung ist identisch mit der bei den Messungen der Abbildungen 3 bis 6 eingestellten.

Abbildung 8 ist die Kopie einer photographischen Aufnahme der Oberfläche einer biaxial gestreckten Polyethylenterephthalatfolie unter Verwendung eines Rohstoffs mit pulverisierten Polymerteilchen nach dem Stand der Technik (DE-OS 30 19 073), wobei deutlich die groben Spitzen des Pigmentes erkennbar sind.

Abbildung 9 ist die Kopie einer photographischen Aufnahme der Oberfläche einer biaxial gestreckten Polyethylenterephthalatfolie, die aus einem erfindungsgemäßen Rohstoff hergestellt wurde. Gegenüber der Folie gemäß Abbildung 8 ist auch hier die Gleichmäßigkeit der Oberflächenstruktur ohne Überkorn zu erkennen.

Die gezeigten Beispiele in Form von Abbildungen sind nicht auf einen Polyethylenterephthalatrohstoff beschränkt, da - wie in der Beschreibung dargelegt - die durch Emulsionspolymerisation hergestellten Teilchen auch bei anderen Polyestern eingesetzt werden können.

**Patentansprüche**

1. Polyesterrohstoff, der feinteilige, im wesentlichen homodispers verteilte vernetzte Polymerteilchen enthält, dadurch gekennzeichnet, daß der Rohstoff 0,005 bis 5,0 Gew.-%, bezogen auf die Gesamtrohstoffmenge, an vernetzten, durch Emulsionspolymerisation hergestellten Polymerteilchen enthält, die eine Korngrößenverteilung im Bereich von 0,02 bis 2,0 µm aufweisen, wobei der Quotient aus dem Gewichtsmittel des Teilchendurchmessers ($D_w$) und dem Zahlenmittel des Teilchendurchmessers ($D_n$) bevorzugt < 1,1, insbesondere < 1,05 ist.

2. Polyesterrohstoff nach Anspruch 1, dadurch gekennzeichnet, daß er aus Polyethylenterephthalat besteht.

3. Formkörper aus einem Polyesterrohstoff nach Anspruch 1 oder 2, dadurch gekennzeichnet, daß er in Form einer Folie vorliegt.

4. Folie nach Anspruch 3, dadurch gekennzeichnet, daß sie orientiert ist.

5. Folie nach Anspruch 4, dadurch gekennzeichnet, daß sie biaxial orientiert ist.

6. Folie nach einem der Ansprüche 3 bis 5, dadurch gekennzeichnet, daß sie thermofixiert ist.

7. Folie nach einem der Ansprüche 3 bis 6, dadurch gekennzeichnet, daß sie Teil einer Verbundfolie ist.

8. Folie nach Anspruch 7, dadurch gekennzeichnet, daß eine der äußeren Schichten ein Pigment enthält, während die zweite äußere Schicht unpigmentiert ist.

9. Formkörper aus einem Polyesterrohstoff nach Anspruch 1 oder 2, dadurch gekennzeichnet, daß er in Form eines Fadens oder einer Faser vorliegt.

10. Verwendung einer Folie nach einem der Ansprüche 3 bis 8 als Trägermaterial für magnetische Aufzeichnungsträger oder als Kondensatorfolie.

11. Verwendung des Formkörpers nach Anspruch 9 als Reifencord.

## Claims

1. Polyester raw material containing, in a substantially homodispers distribution, finely divided crosslinked polymer particles, characterized in that it comprises from 0.005 to 5.0 percent by weight, based on the total weight of the raw material, of crosslinked polymer particles prepared by emulsion polymerization, which have a grain-size distribution in the range from 0.02 to 2.0 µm, and in which the quotient of the weight average particle diameter ($D_w$) and the number average particle diameter ($D_n$) preferably is < 1.1, particularly < 1.05.

2. A polyester raw material as claimed in claim 1, which comprises polyethylene terephthalate.

3. Molded article comprising a polyester raw material as claimed in claim 1 or claim 2, which has the form of a film.

4. A film as claimed in claim 3, which is oriented.

5. A film as claimed in claim 4, which is biaxially oriented.

6. A film as claimed in any of claims 3 to 5, which is heat-set.

7. A film as claimed in any of claims 3 to 6, which forms part of a composite film.

8. A film as claimed in claim 7, wherein one of the outer layers contains a pigment, while the second outer layer is unpigmented.

9. A molded article comprised of a polyester raw material as claimed in claim 1 or claim 2, which has the form of a filament or a fiber.

10. Use of a film as claimed in any of claims 3 to 8, as a support material for magnetic recording elements or as a capacitor film.

11. Use of the molded article as claimed in claim 9, as a tire cord.

## Revendications

1. Produit brut à base de polyester qui contient des particules de polymères réticulées, finement divisées et essentiellement homodispersées, caractérisé en ce que le produit brut contient de 0,005 à 5,0 % en poids, par rapport à la quantité totale de produit brut, de particules de polymères réticulées, obtenues par polymérisation en émulsion, lesquelles particules montrent une distribution granulométrique comprise dans une gamme de 0,02 à 2,0 µm, le quotient de la moyenne en poids du diamètre des particules ($D_p$) à la moyenne en nombre du diamètre des particules ($D_n$) étant de préférence inférieur à 1,1 et en particulier inférieur à 1,05.

2. Produit brut à base de polyester selon la revendication 1, caractérisé en ce qu'il est constitué de polytéréphtalate d'éthylène.

3. Article mis en forme comprenant un produit brut à base de polyester selon l'une des revendications 1 et 2, caractérisé en ce qu'il se présente sous la forme d'une feuille.

4. Feuille selon la revendication 3, caractérisée en ce qu'elle est orientée.

5. Feuille selon la revendication 4, caractérisée en ce qu'elle est orientée biaxialement.

6. Feuille selon l'une quelconque des revendications 3 à 5, caractérisée en ce qu'elle est fixée à la chaleur.

7. Feuille selon l'une quelconque des revendications 3 à 6, caractérisée en ce qu'elle est une partie d'une feuille composite.

8. Feuille selon la revendication 7, caractérisée en ce qu'une des couches externes contient un pigment, alors que la seconde couche externe n'est pas pigmentée.

9. Article mis en forme comprenant un produit brut à base de polyester selon l'une des revendications 1 et 2, caractérisé en ce qu'il se présente sous la forme d'une fibre ou d'un filament.

10. Utilisation d'une feuille selon l'une quelconque des revendications 3 à 8 comme matériau de support pour des supports d'enregistrement magnétiques ou comme feuille pour condensateur.

11. Utilisation d'un article mis en forme selon la revendication 9 comme cablés pour pneumatique.

Abb. 1      KORNGROESSENVERTEILUNG

Korngrößenverteilungskurven:

\*    beanspruchte organische
      Partikel

O    org. Partikel, nach dem Stand
      der Technik durch Mahlung er-
      halten

Abb. 6    Folie aus einem Rohstoff nach dem Stand der Technik

Abb. 7    Folie aus einem Rohstoff nach der Erfindung

Abb. 8    Folie aus einem Rohstoff nach dem Stand der Technik unter
          Verwendung von aufgemahlenen Polymerpartikeln

Abb. 9    Folie aus einem Rohstoff nach der Erfindung unter Verwen-
          dung von nicht weiterbehandelten, vernetzten Polymerpar-
          tikeln, die in Emulsionspolymerisation hergestellt wurden

Abb. 2    Rz - VERTEILUNG C.O. 0.25 MM

    * BI 22039/2C
    o BI 22039/3C

    o  mit beanspruchten organischen Partikeln

    *  mit organischen Partikeln, nach dem Stand der
       Technik durch Mahlung erhalten

7

Abb. 3    Folie aus einem Rohstoff nach dem Stand der Technik

Abb. 4    Folie aus einem Rohstoff nach dem Stand der Technik

Abb. 5    Folie aus einem Rohstoff nach dem Stand der Technik